# DEMANDE DE BREVET EUROPEEN

(11) **EP 1 464 439 A2**
(43) Date de publication de la demande: **06.10.2004**
(21) Numéro de dépôt: 04101378.0
(22) Date de dépôt: 02.04.2004
(51) Int. Cl.: B23K 37/02

(54) **Dispositif pour réaliser la soudure en continu de deux viroles métalliques**

(30) Priorité: 03.04.2003 FR 0304135
(71) Demandeur: CONSTRUCTIONS SOUDEES DU COTEAU CSC, 42120 Le Coteau (FR)
(72) Inventeur: JACQUET, Xavier, 42120, TERREUX (FR); GARDETTE, André, 42120, LE COTEAU (FR)
(74) Mandataire: Vuillermoz, Bruno

(57) **Abrégé**

Ce dispositif pour réaliser la soudure en continu de deux viroles métalliques ou de secteurs de virole métallique, comprend :
- un châssis constitué d'au moins deux structures verticales (2-5) s'étendant de part et d'autre des viroles ou secteurs de virole à souder, et reliées au niveau de leur extrémité supérieure par une traverse (6), munie de moyens (26) permettant de se positionner sur la rive supérieure de la virole supérieure (21) ;
- des moyens de progression (8, 9, 10) solidaires des structures verticales (2-5), et destinés à assurer la progression du dispositif le long des viroles à souder ;
- des organes de soudage (15) positionnés sensiblement au voisinage de l'extrémité inférieure des structures verticales (2 - 5), et orientés en direction des viroles à souder.

## Description

L'invention concerne un dispositif permettant de réaliser la soudure en continu de deux viroles métalliques.

Une telle machine trouve tout naturellement son domaine d'application dans la réalisation d'enceintes ou d'enveloppes métalliques cylindriques de grande capacité, telle que par exemple des cuves, utilisées notamment dans les domaines alimentaires, chimiques, agrochimiques, pétrochimiques, ainsi que dans le domaine de l'environnement (traitement d'effluents).

Traditionnellement, de telles enceintes ou cuves de grande capacité, c'est à dire typiquement supérieures ou égales à 10 mètres de haut et 15 mètres de diamètre, sont réalisées de la manière suivante :
- on réalise des viroles cylindriques de manière unitaire à partir d'une bande métallique ;
- on soude la virole la plus basse sur un fond métallique, préalablement mis en place au niveau d'un radier ;
- puis on procède à la mise en place des viroles une à une au moyen d'une grue sur la ou les viroles déjà assemblées, et on procède à la soudure horizontale de chacune des viroles ainsi mises en place sur la virole inférieure.

Une fois la soudure réalisée, on procède à un laminage du cordon de soudure, puis à une éventuelle étape de finition, telle que notamment une étape de polissage.

Dans une variante, plus spécifiquement dédiée aux cuves de très grande capacité, il est également possible de réaliser les viroles, non pas à partir d'une bande métallique continue, mais par l'assemblage de tôles rectangulaires en forme de secteurs de virole pré-cintrés, que l'on vient souder d'une part l'une avec l'autre, et d'autre part sur les viroles préalablement réalisées, ces soudures étant donc horizontales et sensiblement verticales.

Ces différentes opérations sont donc particulières longues à mettre en oeuvre, difficiles à réaliser, et imposent la mise en place d'échafaudages, de sorte que le besoin s'est fait sentir de simplifier, à tout le moins une partie de ces opérations.

L'objet de la présente invention est de proposer un dispositif permettant notamment de simplifier les opérations de soudure ou de finition, notamment en réalisant le laminage du cordon de soudure, ce qui élimine les déformations de la virole, consécutives au retrait de soudure, et réduit au maximum les éventuelles opérations de polissage.

De fait, le dispositif conforme à l'invention pour réaliser la soudure en continu de deux viroles métalliques ou de secteurs de virole métalliques, comprend :
- un châssis constitué d'au moins deux structures verticales s'étendant de part et d'autre des viroles ou des secteurs de virole à souder, et reliées au niveau de leur extrémité supérieure par une traverse, munie de moyens permettant de se positionner sur la rive supérieure de la virole supérieure ;
- des moyens solidaires des structures verticales, et destinés à assurer la progression du dispositif le long des viroles à souder ;
- des organes de soudage positionnés sensiblement au voisinage de l'extrémité inférieure des structures verticales, et orientés en direction des viroles à souder.

En d'autres termes, l'invention propose un dispositif auto-moteur, permettant d'assurer sensiblement automatiquement ou semi-automatiquement la soudure horizontale de deux viroles entre elles, de manière relativement simple.

Selon une première caractéristique de l'invention, les moyens de progression sont constitués de galets presseurs et moteurs, montés sur des chariots réglables en position horizontale, afin de permettre l'appui desdits galets sur la virole supérieure, et corollairement la progression du dispositif le long des viroles à assembler. La virole supérieure se trouve ainsi insérée entre les galets moteurs et presseurs.

En outre, les moyens de positionnement sont constitués de bogies, destinés à se positionner sur la rive supérieure de la virole supérieure, lesdits bogies étant réglables en orientation dans le plan horizontal, afin de permettre l'adaptation de la progression du dispositif en fonction du rayon de courbure ou diamètre des viroles.

Avantageusement, ces bogies sont en outre articulés par rapport à un axe horizontal, permettant une meilleure adaptation du dispositif à l'horizontalité des viroles.

Selon une version évoluée de l'invention, le plan de roulement horizontal des bogies est réglable, notamment de manière discrète, en hauteur. En effet, un tel réglage permet l'adaptation du dispositif de l'invention aux différentes largeurs standards des tôles, telles que proposées par les aciéristes.

Avantageusement, le dispositif comporte en outre des galets de laminage, mus en rotation, solidaires des deux structures verticales, et positionnés sensiblement au même niveau que les organes de soudage.

De fait et avantageusement, le dispositif conforme à l'invention ne comporte pas deux mais quatre structures verticales, respectivement deux structures antérieures par rapport au sens de déplacement du dispositif, portant les têtes de soudage, et deux structures postérieures portant les galets de laminage.

La vitesse de rotation périphérique des galets de laminage est identique à la vitesse de rotation périphérique des galets de progression et ce, dans un souci d'éviter des phénomènes de glissement ou d'arrachement.

Selon une variante de l'invention, partie des opérations de finition autres que le laminage du cordon de soudure et le polissage, et notamment le décapage et la passivation des soudures, est réalisée à l'aide d'un dispositif annexe au dispositif principal décrit ci-dessus. Plus spécifiquement, les organes nécessaires pour la réalisation de ces opérations sont embarqués sur un chariot, également mobile sur la rive supérieure de la virole supérieure, et soit tiré par le dispositif principal par l'intermédiaire d'un timon, soit pourvu de moyens auto-moteurs, propres à assurer sa propre progression le long des viroles à assembler, lesdits moyens étant du même type que ceux du dispositif principal.

En outre, le dispositif de l'invention comprend également des organes de soudure, propres à assurer la soudure verticale des secteurs d'une même virole entre eux, et solidarisées au niveau des structures verticales postérieures.

La manière dont l'invention peut être réalisée et les avantages qui en découlent ressortiront mieux de l'exemple de réalisation qui suit, donné à titre indicatif et non limitatif à l'appui des figures annexées.
La figure 1 est une représentation schématique en perspective du dispositif conforme à l'invention, vu de la face antérieure.
La figure 2 est une vue de face de la face antérieure du dispositif de la figure 1.
La figure 3 est une vue de profil du dispositif de la figure 1.
La figure 4 est une vue de face du dispositif de la figure 1, avec les structures antérieures escamotées.
Les figures 5 et 6 sont également des vues de face du dispositif conformément à l'invention, illustrant la modification possible de la hauteur des têtes de soudage.
La figure 7 est une vue du dessus du dispositif de l'invention en l'absence des bogies support.
La figure 8 est une vue du dessous de la partie supérieure du dispositif conforme à l'invention.
La figure 9 est une représentation schématique en perspective du dispositif conforme à l'invention, vu de la face postérieure d'une variante de l'invention, permettant d'assurer la soudure verticale des secteurs d'une même virole entre eux.
La figure 10 est une vue analogue de la figure 1, représentant une variante de l'invention, dont la figure 11 est une vue de profil.

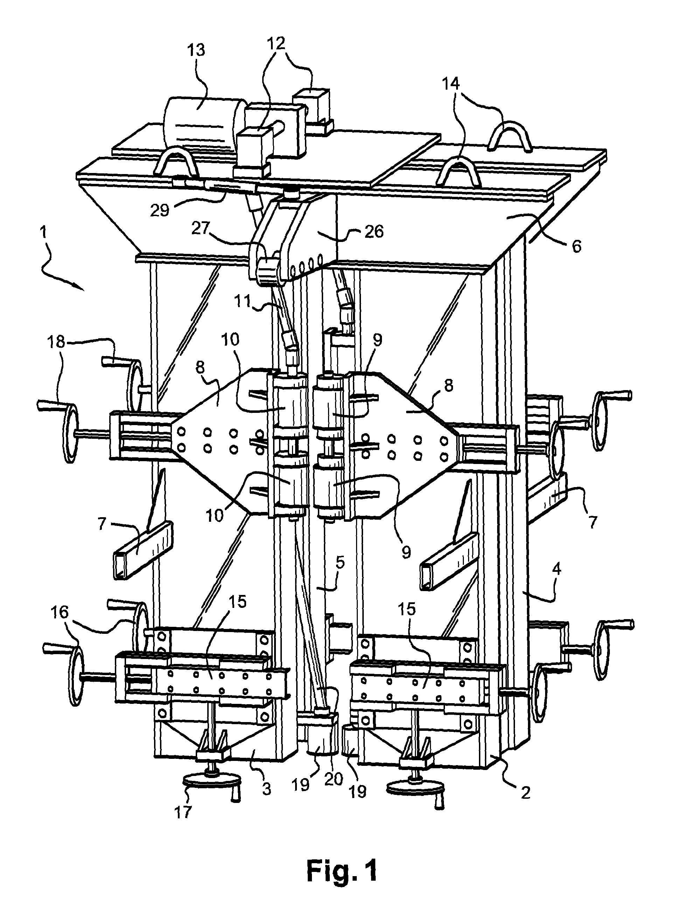

On a donc illustré en relation avec la figure 1, le dispositif (1) conforme à l'invention.

Celui-ci est fondamentalement constitué d'une structure métallique ou châssis, comportant quatre éléments verticaux (2), (3), (4), (5), parallèles entre eux et de même hauteur, solidarisés au niveau de leur extrémité supérieure par une traverse (6).

Ces éléments verticaux sont destinés à venir se positionner de part et d'autre des deux viroles métalliques à souder entre elles. Plus précisément, les deux éléments (2) et (4) sont destinés à être positionnés à l'intérieur des viroles, et les éléments (3) et (5) sont destinés à être positionnés à l'extérieur des viroles.

Des supports (7) de nacelles, destinées à venir également se positionner de part et d'autre des viroles à souder, sont solidarisés aux dits éléments (2 - 5). Ces nacelles sont conçues pour permettre la surveillance des travaux à réaliser par le dispositif de l'invention par un ou plusieurs techniciens.

En outre, le dispositif (1) est destiné à reposer sur la rive supérieure de la virole supérieure par l'intermédiaire de bogies de support et de guidage (26), illustrés plus en détail ultérieurement.

Ces bogies reposent sur la rive proprement dite de la viroles supérieure, si celle-ci présente une rigidité et donc une épaisseur suffisante pour éviter le flambement, mais peut également se déplacer sur un anneau de renfort intérieur, solidarisé à ladite virole au niveau de la partie supérieure de la surface interne de ladite virole supérieure, afin de lui conférer une certaine rigidité.

Afin d'assurer sa progression le long des viroles à souder entre elles, le dispositif (1) est muni de moyens de progression comprenant les éléments suivants :

Tout d'abord, chacun des éléments verticaux (2) (3) (4) et (5), est muni d'un chariot de motorisation (8), solidarisé respectivement au niveau des faces antérieures des éléments (2) et (3) et faces postérieures des éléments verticaux (4) et (5).

Ces chariots sont montés à hauteur constante au niveau desdits éléments, mais sont susceptibles d'être réglés en horizontalité au moyen d'organes de réglage (18), typiquement constitués par une vis et manivelle.

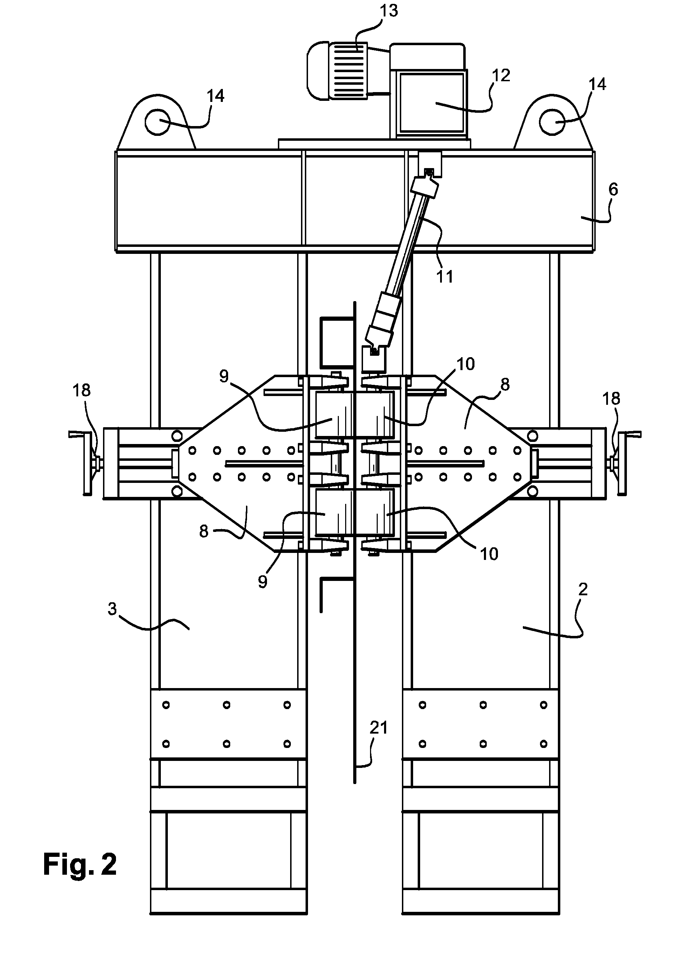

L'objectif recherché est de permettre la coopération effective des moyens de progression avec la virole supérieure (21) (figure 2).

De fait, chacun de ces chariots de motorisation (8) comprend un jeu de deux galets de même axe de rotation vertical.

En face amont des éléments verticaux (2) et (3), le dispositif comprend un jeu de deux galets moteurs (10) et un jeu de deux galets presseurs (9). Il en est de même s'agissant de la face arrière.

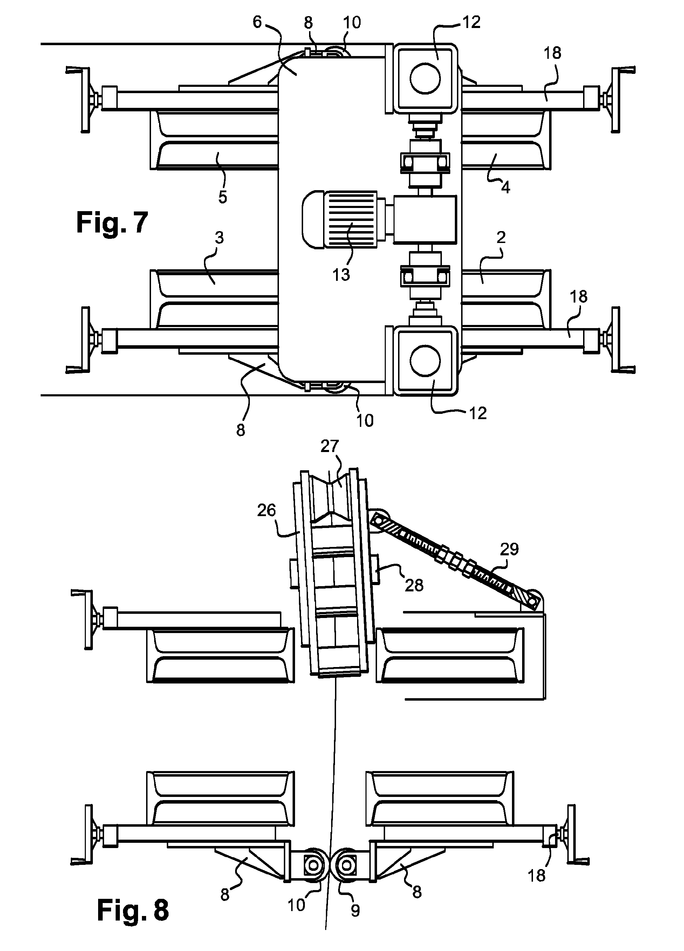

Les galets moteurs (10) sont actionnés en rotation au moyen d'un cardan (11), lui-même mu en rotation par un moteur électrique (13), et par un moto-réducteur et renvoi d'angle (12), ainsi qu'on peut l'observer, tant sur la figure 1 que sur la figure 7. La vitesse de rotation des galets moteurs (10) de chacun des deux chariots moteurs, respectivement face amont et face arrière, est la même.

Les galets (9) sont montés libre en rotation selon un même axe de rotation. Chacun des galets est avantageusement muni d'un revêtement polyuréthanne, afin d'une part, de permettre l'adhérence au niveau de la virole (21) et d'autre part, afin d'éviter le risque d'altération de la tôle métallique, constitutive de la virole (21).

Le guidage et le support du dispositif (1) conforme à l'invention au niveau de la virole supérieure (21) est assuré au moyen de bogies (26) (voir figure 1 et figure 8).

Ces bogies (26), respectivement un bogie amont et un bogie aval, sont tout d'abord articulés selon un axe vertical (non représenté), afm de permettre l'adaptation du dispositif au rayon de courbure ou au diamètre de la virole sur laquelle il prend appui.

On fige cette configuration au moyen d'un tirant approprié (29) muni d'un tendeur du type double-vis-écrou, en fonction justement du diamètre ou du rayon de courbure de la virole (21).

Ces bogies amont et aval (26) sont en outre avantageusement articulés autour d'un axe d'articulation horizontal (28), pour permettre une meilleure adaptation du dispositif sur la rive supérieure de la virole supérieure, ou sur un anneau de renfort supérieur, dont peut être munie ladite virole supérieure (21).

Ces bogies comprennent différents galets (27), tournant librement en rotation, l'un ou plusieurs d'entre eux étant éventuellement muni d'une gorge médiane orientée perpendiculairement à l'axe de rotation desdits galets, et visant à favoriser le guidage effectif du dispositif sur la virole supérieure.

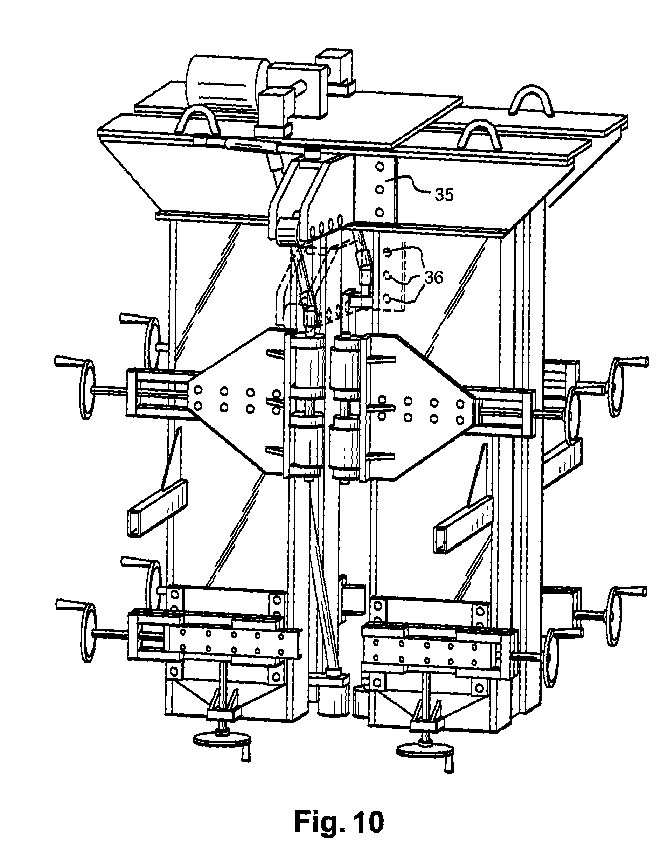

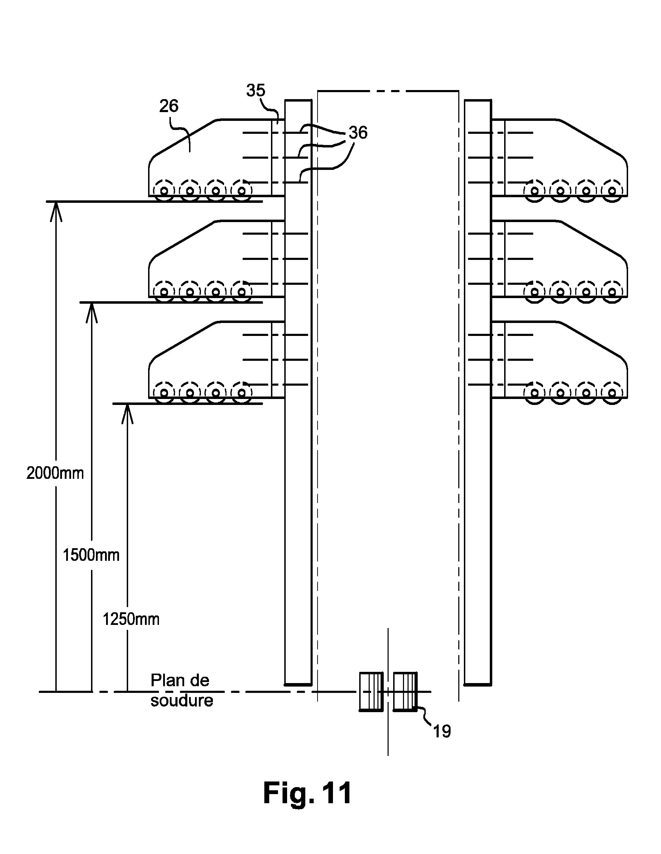

Selon une variante de l'invention représentée en relation avec les figures 10 et 11, le plan de roulement horizontal des bogies peut être adapté, notamment en fonction de la largeur des tôles mises en oeuvre pour la réalisation des viroles. En effet, les aciéristes proposent des largeurs standards, typiquement 1250 mm, 1500 mm, 2000 mm, et partant, il convient de pouvoir adapter le dispositif de l'invention en fonction de la tôle dont on dispose.

A cet effet, on munit chacun des éléments verticaux d'une plaque d'assise (35), rapportée par tout moyen et notamment par soudage. Plus précisément, ces plaques d'assise sont positionnées au voisinage de l'extrémité supérieure de chacun desdits éléments, de part et d'autre de l'espace libre séparant deux éléments d'un même jeu.

Ces plaques d'assise (35) sont munis de jeux d'orifices traversants (36) alignés verticalement, au sein desquels sont susceptibles d'être introduits des moyens de fixation réversible des bogies, respectivement amont et aval, et notamment des tire-fonds.

Les dimensions de ces plaques d'assise, outre l'écartement entre les dits orifices (36) d'un même jeu sont choisis de telle sorte à permettre le positionnement des galets (27), c'est à dire du plan de roulement horizontal desdits bogies selon des cotes déterminées, correspondant, au jeu près, à la hauteur des viroles à souder, c'est à dire, à la largeur des tôles mises en oeuvre.

On a ainsi matérialisé au sein de la figure 10, le bogie amont en traits continus, correspondant à une virole de hauteur 2000 mm, et en traits discontinus, le positionnement du même bogie pour une hauteur de virole de 1500 mm.

Par ailleurs, on a représenté en relation avec la figure 11 une vue de profil correspondante, illustrant cette fois trois cotes possibles du plan de roulement horizontal des bogies. On observe notamment sur cette figure, la variation discrète possible de la distance séparant le plan de soudure dudit plan de roulement, cette distance correspondant au jeu près à la hauteur de la virole à souder, c'est à dire, à la largeur de la tôle mise en oeuvre, et typiquement 1250 mm, 1500 mm ou 2000 mm.

On conçoit donc qu'en procédant au simple déplacement des bogies sur les plaques d'assise appropriée, il est possible de moduler le dispositif de l'invention et de l'adapter aux standards des matériaux mis en oeuvre.

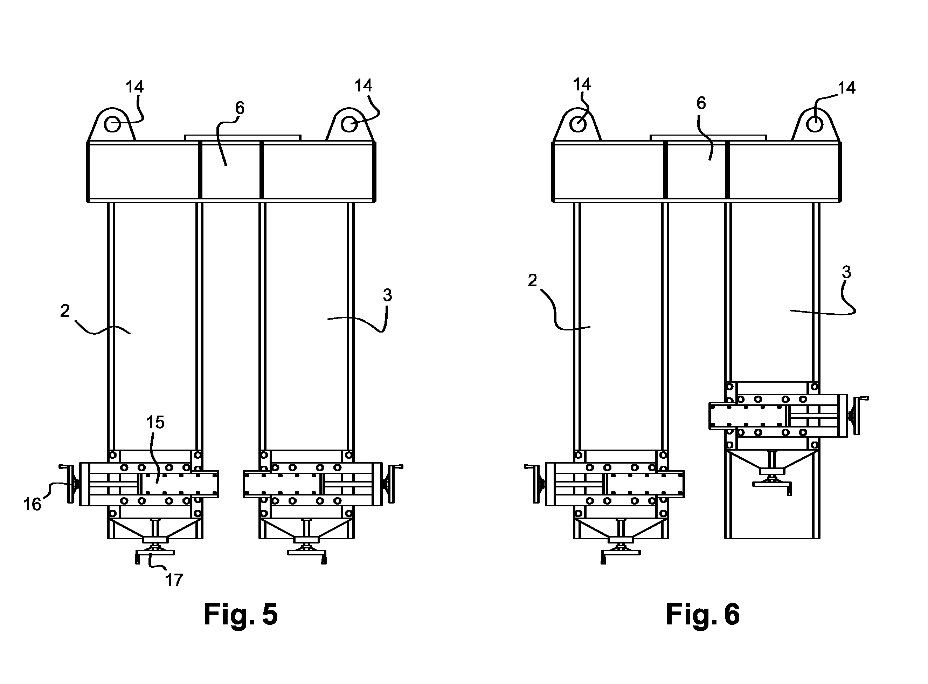

Selon l'invention, les éléments verticaux antérieurs (2) et (3) sont munis au voisinage de leur extrémité inférieure libre d'organes de soudage (15), typiquement montés sur un chariot, réglable à la fois dans le sens vertical et dans le sens horizontal, à l'aide de moyens appropriés (16) et (17) du type vis et manivelle (voir figures 5 et 6).

Ces organes de soudage sont d'un type en soi connu (notamment sous les types TIG, MIG ou MAG, selon la dénomination dans le domaine de la soudure) de sorte qu'il n'y a pas lieu de les décrire en détail.

Ce faisant, il est possible de régler précisément le lieu d'action de la soudure, une fois le dispositif (1) mis en place.

De la sorte, on conçoit aisément, qu'après réglage effectif du positionnement des têtes de soudage, le dispositif conforme à l'invention permet d'assurer la soudure de deux viroles l'une sur l'autre, en continu et en automatique.

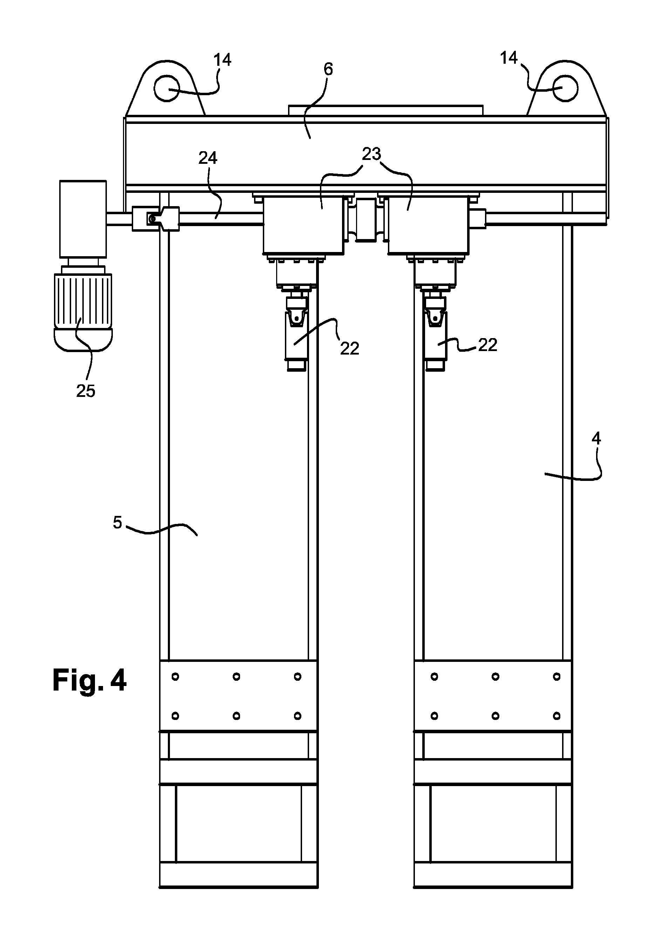

Avantageusement, le dispositif conforme à l'invention comprend également des galets de laminage (19), destinés à écraser ou laminer le cordon de soudure résultant de l'opération de soudure précédemment effectuée. Ces galets de laminage (19) sont mus en rotation au moyen d'un cardan (20), solidarisé à l'extrémité inférieure (22) d'un renvoi d'angle (23), lui-même mu en rotation au moyen d'un cardan (24), actionné par un moteur électrique (25) (figure 4).

Selon une caractéristique de l'invention, la vitesse de rotation périphérique des galets de laminage (19) est identique à la vitesse de rotation périphérique des galets de progression (9) et (10) des chariots de progression (8). Ce faisant, et ainsi que déjà précisé, on évite les phénomènes de glissement ou d'arrachement.

De fait, les moteurs électriques (25) et (13) sont gérés par un seul variateur de fréquence, permettant de gérer précisément ces vitesse de rotation.

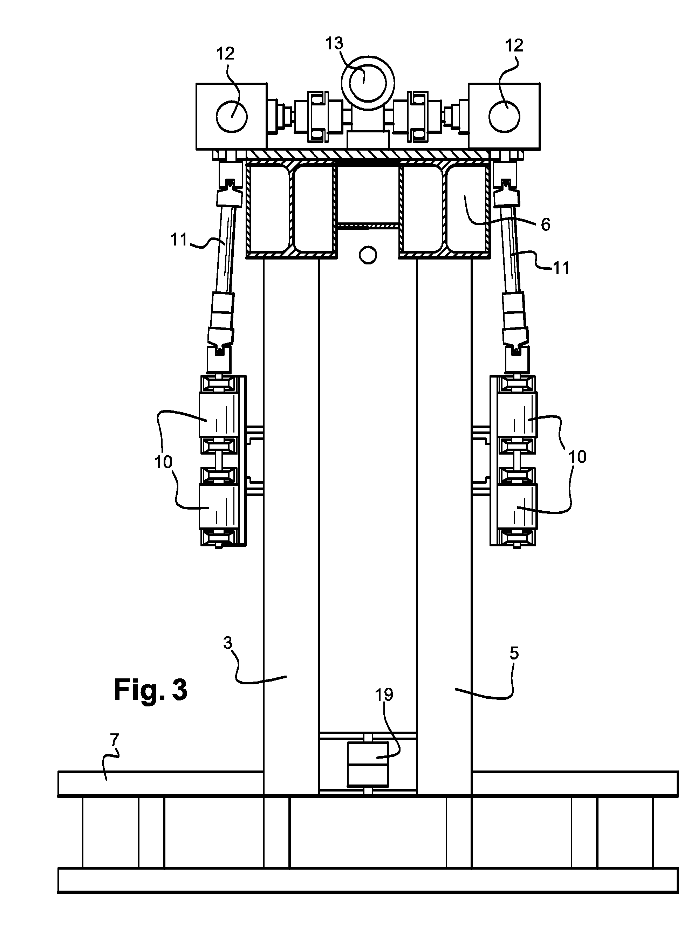

Ainsi qu'on peut l'observer, notamment sur les figures 1 et 3, ces galets de laminage sont positionnés au voisinage de l'extrémité inférieure des éléments verticaux, et plus précisément entre les éléments verticaux antérieurs et postérieurs. Ils sont fixés chacun sur un chariot support coulissant dans le plan horizontal, l'effort de laminage étant exercé par deux vérins, dont l'un est hydraulique, et dont l'autre, servant de butée est un vérin à vis.

Ce faisant, ils constituent un troisième point d'appui et de stabilisation du dispositif lorsqu'il est mis en place, puisque ces galets sont également destinés à être en contact intime avec les deux viroles au voisinage de leur zone de jonction.

Selon une autre caractéristique avantageuse de l'invention, les éléments postérieurs (4) et (5) du dispositif de l'invention sont munis d'organes de polissage (27), également montés sur des chariots, réglables dans le sens horizontal et vertical, afin de venir en contact intime avec la zone de soudure.

De la sorte, en une seule opération, c'est à dire par une seule rotation du dispositif de l'invention, il devient possible de réaliser la soudure des deux viroles entre elles, l'écrasement du cordon de soudure, et le polissage.

Selon une variante de l'invention non représentée, une partie des opérations de finition consécutives à la soudure sont réalisées au moyen d'organes, cette fois non plus disposés sur le dispositif principal de l'invention, tel que décrit précédemment, mais sur un dispositif annexe, susceptible également de se déplacer le long de la structure en cours de réalisation. Ainsi, si comme indiqué précédemment, le cordon de soudure horizontal est laminé au moyen des galets de laminage, puis poli, en revanche, les opérations de décapage et de passivation des soudures, traditionnellement réalisées manuellement sont obtenues par un microbillage, tant horizontal que vertical.

A cet effet, les organes assurant ce microbillage sont embarqués dans un chariot de type analogue à la structure constitutive du dispositif principal, c'est à dire intégrant des éléments verticaux s'étendant de part et d'autre de la structure en cours de réalisation, outre une traverse supérieure, reliant ces éléments verticaux, et également susceptible de recevoir des bogies de déplacement sur la rive supérieure de la virole supérieure. Ce chariot, comme pour le dispositif principal, est susceptible de recevoir une cabine intérieure et extérieure, au niveau respectivement des éléments verticaux intérieurs et extérieurs, les dites cabines permettant à un technicien de surveiller l'opération de microbillage en cours de réalisation.

Ce chariot peut être tracté par le dispositif principal, par exemple au moyen d'un timon. Cependant, il peut lui-même être muni de moyens de déplacement autonomes, du type de ceux décrits en relation avec le dispositif principal de soudure.

Avantageusement, un système d'intercirculation entre le dispositif principal de soudure et le chariot annexe de finition peut être réalisé, permettant aux techniciens de se déplacer entre l'un et l'autre au gré des besoins. Pour ce faire, on peut ainsi mettre en place un platelage relevable entre les deux structures, et ce tant à l'intérieure qu'à l'extérieur.

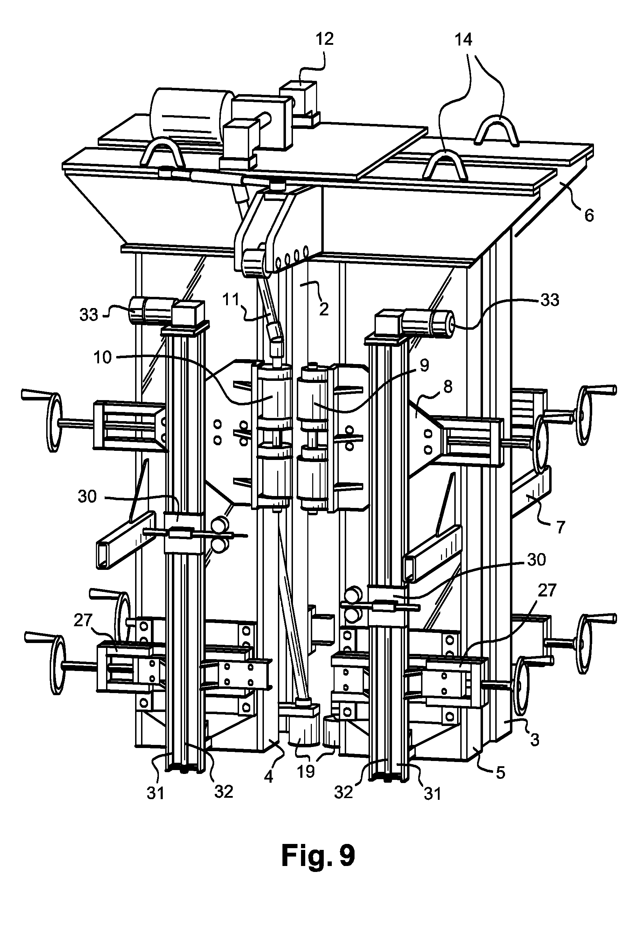

Dans une variante de l'invention, représentée sur la figure 9, le dispositif est à même de réaliser une soudure verticale. Pour ce faire, des chariots (30), portant des organes de soudure appropriés, de type de ceux précédemment mentionnés, sont montés sur des rails verticaux (31), eux-mêmes solidarisés sur la face postérieure des éléments verticaux postérieurs (4, 5). Chacun de ces rails intègre en outre une vis sans fin (32), orientée également verticalement, coopérant avec les chariots (30), et mue en rotation au moyen d'un moteur (33). De la sorte, on assure la progression des chariots (30) verticalement à la vitesse souhaitée. En outre, les organes de soudure portés par les chariots sont également réglables dans le plan horizontal grâce aux chariots (27), afm de permettre le rapprochement desdits organes de la zone à souder. Ces différents éléments sont amovibles, et peuvent très facilement être ôtés de la structure.

Dans cette configuration, il est mis en place manuellement les secteurs de virole sur une virole pré-existante, dont la solidarisation provisoire est assurée par pointage, d'une part desdits secteurs avec la virole inférieure, et d'autre part des secteurs de viroles avec les secteurs adjacents. Une fois cette opération effectuée, le dispositif conforme à l'invention est positionné sur la rive de la virole provisoire ainsi réalisée. Le dispositif est stoppé dans sa progression à l'aplomb d'une zone de jonction entre deux secteurs consécutifs, afin de réaliser la soudure verticale. Cette opération est répétée pour chacun des zones de jonction entre deux secteurs consécutifs. Puis, il est procédé à la soudure horizontale, à l'instar de ce qui a été précédemment décrit, de la virole alors réalisée avec la virole inférieure sous jacente.

Cette concentration d'opérations et cette quasi-automatisation permet de réduire significativement les coûts de réalisation des enceintes cylindriques, notamment de grande capacité, ce que l'on ne savait faire efficacement à ce jour.

## Revendications

1. Dispositif pour réaliser la soudure en continu de deux viroles métalliques ou de secteurs de virole métallique, ***caractérisé* en ce qu'**il comprend :
- un châssis constitué d'au moins deux structures verticales (2-5) s'étendant de part et d'autre des viroles ou secteurs de virole à souder, et reliées au niveau de leur extrémité supérieure par une traverse (6), munie de moyens (26) permettant de se positionner sur la rive supérieure de la virole supérieure (21) ;
- des moyens de progression (8, 9, 10) solidaires des structures verticales (2-5), et destinés à assurer la progression du dispositif le long des viroles à souder ;
- des organes de soudage (15) positionnés sensiblement au voisinage de l'extrémité inférieure des structures verticales (2 - 5), et orientés en direction des viroles à souder.

2. Dispositif pour réaliser la soudure en continu de deux viroles métalliques ou secteurs de virole métallique selon la revendication 1, ***caractérisé* en ce que** les moyens de progression sont constitués de galets presseurs (9) et moteurs (10), montés sur des chariots (8) réglables en position horizontale, afin de permettre l'appui desdits galets sur la virole supérieure (21), et corollairement la progression du dispositif le long des viroles à assembler.

3. Dispositif pour réaliser la soudure en continu de deux viroles métalliques ou de secteurs de virole métallique selon l'une des revendications 1 et 2, ***caractérisé* en ce que** les moyens de positionnement sont constitués de bogies (26), destinés à se positionner sur la rive supérieure de la virole supérieure, lesdits bogies étant réglables en orientation dans le plan horizontal, afin de permettre l'adaptation de la progression du dispositif en fonction du rayon de courbure ou diamètre des viroles à souder.

4. Dispositif pour réaliser la soudure en continu de deux viroles métalliques ou de secteurs de virole métallique selon la revendication 3, ***caractérisé* en ce que** les moyens de positionnement comprennent un bogie amont et un bogie aval, et **en ce que** chacun des bogies (26) est articulé par rapport à un axe horizontal, permettant une meilleure adaptation du dispositif à l'horizontalité des viroles.

5. Dispositif pour réaliser la soudure en continu de deux viroles métalliques ou de secteurs de virole métallique selon l'une des revendications 3 et 4, ***caractérisé* en ce que** les bogies (26) comprennent différents galets (27), tournant librement en rotation, l'un ou plusieurs d'entre eux étant éventuellement muni d'une gorge médiane orientée perpendiculairement à l'axe de rotation desdits galets, et visant à favoriser le guidage effectif du dispositif sur la virole supérieure.

6. Dispositif pour réaliser la soudure en continu de deux viroles métalliques ou de secteurs de virole métallique selon l'une des revendications 3 à 5, ***caractérisé* en ce que** le plan de roulement horizontal des bogies (26) est réglable en hauteur, notamment de manière discrète.

7. Dispositif pour réaliser la soudure en continu de deux viroles métalliques ou de secteurs de virole métallique selon la revendication 6, ***caractérisé* en ce que** chacun des éléments verticaux (2 - 5) est muni d'une plaque d'assise (35), positionnées au voisinage de l'extrémité supérieure de chacun desdits éléments, au niveau desquelles sont solidarisables réversiblement les bogies (26).

8. Dispositif pour réaliser la soudure en continu de deux viroles métalliques ou de secteurs de virole métallique selon l'une des revendications 1 à 7, ***caractérisé* en ce qu'**il comporte en outre des galets de laminage (19) du cordon de soudure, mus en rotation, solidaires des structures verticales, et positionnés sensiblement au même niveau que les organes de soudage.

9. Dispositif pour réaliser la soudure en continu de deux viroles métalliques ou de secteurs de virole métallique selon l'une des revendications 1 à 8, ***caractérisé* en ce qu'**il comporte quatre structures verticales (2 - 5), respectivement deux structures antérieures par rapport au sens de déplacement du dispositif, portant les têtes de soudage, et deux structures postérieures portant les galets de laminage.

10. Dispositif pour réaliser la soudure en continu de deux viroles métalliques ou de secteurs de virole métallique selon la revendication 9, ***caractérisé* en ce que** la vitesse de rotation périphérique des galets de laminage est identique à la vitesse de rotation périphérique des galets de progression.

11. Dispositif pour réaliser la soudure en continu de deux viroles métalliques ou de secteurs de virole métallique selon l'une des revendications 9 et 10, ***caractérisé* en ce qu'**il comporte en outre des organes de polissage (27), également montés sur des chariots, réglables dans le sens horizontal et vertical, afin de venir en contact intime avec la zone de soudure, et solidarisés au voisinage de l'extrémité inférieur des structures verticales postérieures (4, 5).

12. Dispositif pour réaliser la soudure en continu de deux viroles métalliques ou de secteurs de virole métallique selon l'une des revendications 9 et 10, ***caractérisé* en ce qu'**il comprend des chariots (30), portant des organes de soudure appropriés réglables dans le sens horizontal, montés sur des rails verticaux (31), eux-mêmes solidarisés sur la face postérieure des éléments verticaux postérieurs (4, 5), chacun de ces rails intégrant en outre une vis sans fm (32) ou équivalent, orientée également verticalement, coopérant avec les chariots (30), et mue en rotation au moyen d'un moteur (33), destinée à assurer la progression des chariots (30) verticalement à la vitesse souhaitée.

13. Dispositif pour réaliser la soudure en continu de deux viroles métalliques ou de secteurs de virole métallique selon l'une des revendications 1 à 12, ***caractérisé* en ce qu'**il comprend en outre une structure annexe, également susceptible de se déplacer sur la rive supérieure de la virole supérieure, et destiné à embarquer les organes nécessaires pour assurer le décapage et la passivation des soudures alors réalisées.

14. Dispositif pour réaliser la soudure en continu de deux viroles métalliques ou de secteurs de virole métallique selon la revendication 13, ***caractérisé* en ce que** lesdits organes sont constitués par un organe de microbillage.

15. Dispositif pour réaliser la soudure en continu de deux viroles métalliques ou de secteurs de virole métallique selon l'une des revendications 13 et 14, ***caractérisé* en ce que** la structure annexe est soit tirée par le dispositif de soudure selon l'une des revendications 1 à 12, par l'intermédiaire d'un timon, soit pourvu de moyens auto-moteurs, propres à assurer sa propre progression le long des viroles à assembler, lesdits moyens étant du même type que ceux dudit dispositif de soudure.
